# EUROPÄISCHE PATENTSCHRIFT

(11) **EP 1 462 692 B1**
(45) Veröffentlichungstag und Bekanntmachung des Hinweises auf die Patenterteilung: **08.11.2006**
(21) Anmeldenummer: 04002506.6
(22) Anmeldetag: 05.02.2004
(51) Int. Cl.: F16K 3/02, F16K 27/04

(54) **Ventiloberteil für Armaturen**
Valve head
Tête de robinet

(30) Priorität: 24.03.2003 DE 20304796 U
(43) Veröffentlichungstag der Anmeldung: 29.09.2004
(73) Patentinhaber: Flühs Drehtechnik GmbH, D-58515 Lüdenscheid (DE)
(72) Erfinder: Thurau, Friedrich, 58515 Lüdenscheid (DE); Schwarzer, Peter, 58515 Lüdenscheid (DE)
(74) Vertreter: Dörner, Lothar

(56) Entgegenhaltungen:
- EP-A- 0 129 659
- US-A- 4 854 347
- US-A- 6 045 118

## Beschreibung

Die Erfindung betrifft ein Ventiloberteil mit einem Kopfstück, in dem eine Spindel angeordnet ist, die auf einer Scheibenführung aufliegt und formschlüssig mit einer in der Scheibenführung geführten Steuerscheibe im Eingriff steht, die mit einer dreh- und schiebefesten Einlassscheibe in Berührung steht, die mindestens eine Durchtrittsöffnung aufweist, wobei die Spindel einen kugelförmigen Abschnitt aufweist.

Mit Hilfe von Ventiloberteilen wird der Austritt von Medien aus Armaturen gesteuert. Für diesen Zweck wird das Ventiloberteil mittels seines Kopfstücks in das Gehäuse einer Armatur geschraubt; auf seine drehbare Spindel wird ein Drehgriff oder Hebel gesteckt. Bei bekannten Ventiloberteilen mit drehbarer Spindel (vgl. DE 32 07 895 C2, DE 36 38 180 C2, DE 87 15 044 U1) sind jeweils zwei Scheiben zur Steuerung des Durchflusses vorgesehen. Die Scheiben sind aus keramischem Material hergestellt. Eine der beiden Scheiben - Steuerscheibe - ist mit Hilfe eines mit der Spindel in Verbindung stehenden Mitnehmers drehbar in dem Ventiloberteil angeordnet. Die andere Scheibe - Einlassscheibe - ist eine feste Ventilsitzscheibe, auch als Festscheibe bezeichnet. Bei Drehung der Steuerscheibe gleiten die Scheiben aneinander. Auf der dem Ventilsitz der Armatur zugewandten Seite ist eine Dichtung angeordnet, die an der Einlassscheibe anliegt. Die Dichtung überragt die Stirnfläche des Ventiloberteils. Sie dient zur Abdichtung sowohl zur Einlassscheibe als auch zum Ventilsitz der Armatur.

Auch bei Einhebel-Mischventilen finden zur Steuerung des Durchflusses KeramikScheiben Anwendung (vgl. WO 93/02309). Bei diesen Ventilen ist eine dreh- und schwenkbar gelagerte Spindel vorgesehen, mit deren Hilfe die Steuerung des Durchflusses erfolgt. Die Spindel weist eine Kugel auf, mit deren Hilfe die Spindel in dem Kopfstück schwenkbar ist. Unmittelbar im Anschluss weist die Spindel einen weiteren kugelförmigen Teil auf, mit dem die Spindel in einen mit der Steuerscheibe in Verbindung stehenden Mitnehmer greift.

Bei den bekannten Ventiloberteilen mit drehbarer Spindel ist die Spindel in dem Kopfstück nur begrenzt drehbar. Der zulässige Drehradius wird beispielsweise durch Anschlagprofile begrenzt. Eine vermehrte Nutzung der Armatur, verbunden mit häufigen mechanischen Stößen auf die Anschlagprofile durch Überdrehen der Spindel kann zu Materialermüdungen führen. Dieses wird insbesondere dadurch begünstigt, dass der Handgriff einen wesentlich größeren Radius aufweist als die Spindel, wodurch geringe Kräfte in große Momente umgesetzt werden. Aus der US 6,045,118 ist ein Ventiloberteil mit drehbarer Spindel bekannt; dieses erfordert jedoch auf Grund der, teilweise vorzuspannenden Bauteile einen erhöhten Montageaufwand.

Hier will die Erfindung Abhilfe schaffen. Der Erfindung liegt die Aufgabe zugrunde, ein Ventiloberteil für Armaturen zu schaffen, das die vorgenannten Nachteile vermeidet und bei dem ein Überdrehen der Spindel ausgeschlossen ist. Gemäss der Erfindung wird diese Aufgabe durch die Merkmale des kennzeichnenden Teils des Patentanspruchs 1 gelöst.

Mit der Erfindung ist ein Ventiloberteil für Armaturen geschaffen, das die vorgenannten Nachteile vermeidet und bei dem ein Überdrehen der Spindel ausgeschlossen ist. Hierdurch wird der Komfort des Ventiloberteils erhöht und die Lebensdauer positiv beeinflusst. Zudem ist das erfindungsgemäße Ventiloberteil mit jedem herkömmlichen Sitz kompatibel und bietet die identischen Bewegungsmöglichkeiten eines Einhebel-Mischventils. Darüber hinaus ist durch das Vorsehen der Überwurfhülse eine Ausrichtung des Oberteils in jeder beliebigen Bedienerposition ermöglicht.

Das Kopfstück ist an seinem dem Zulauf abgewandten Ende verjüngt ausgeführt und auf dem verjüngt ausgeführten Abschnitt des Kopfstücks eine Überwurfhülse mit einem Gewindestück aufgeschoben, an das sich ein Außensechskant anschließt. Die Überwurfhülse dient als Anschlussgewinde zum Anschrauben des Ventiloberteils in die Armatur.

In Weiterbildung der Erfindung ist das Kopfstück an seinem dem Zulauf abgewandten Ende verjüngt ausgeführt und auf dem verjüngt ausgeführten Abschnitt des Kopfstücks eine Überwurfhülse mit einem Gewindestück geschoben, an das sich ein Aussensechskant anschließt.

In Weiterbildung der Erfindung weist das Kopfstück einen zentralen Zulauf auf. Hierdurch ist die Realisierung von Armaturen für lediglich einen Zulauf mit der komfortablen Bewegung von Einhandmischern ermöglicht.

In vorteilhafter Ausbildung ist die Spindel über eine drehfeste Scheibenführung axial geführt und die Steuerscheibe, in welche das Spindelende eingreift, in der Scheibenführung in einer Nut radial verschiebbar angeordnet. Hierdurch sind alle möglichen Freiheitsgrade einer Einhandmischer-Armatur auf eine radiale Bewegung der Steuerscheibe reduziert. Infolgedessen sind die beiden benötigten Zustände "Zentralzulauf offen" und "Zentralzulauf geschlossen" hervorgerufen.

Vorteilhaft ist die Hülse wechselbar ausgeführt, sodass zur Anpassung an unterschiedliche Einbausituationen Überwurfhülsen mit verschiedenen Gewindeaußenmaßen aufgebracht werden können.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

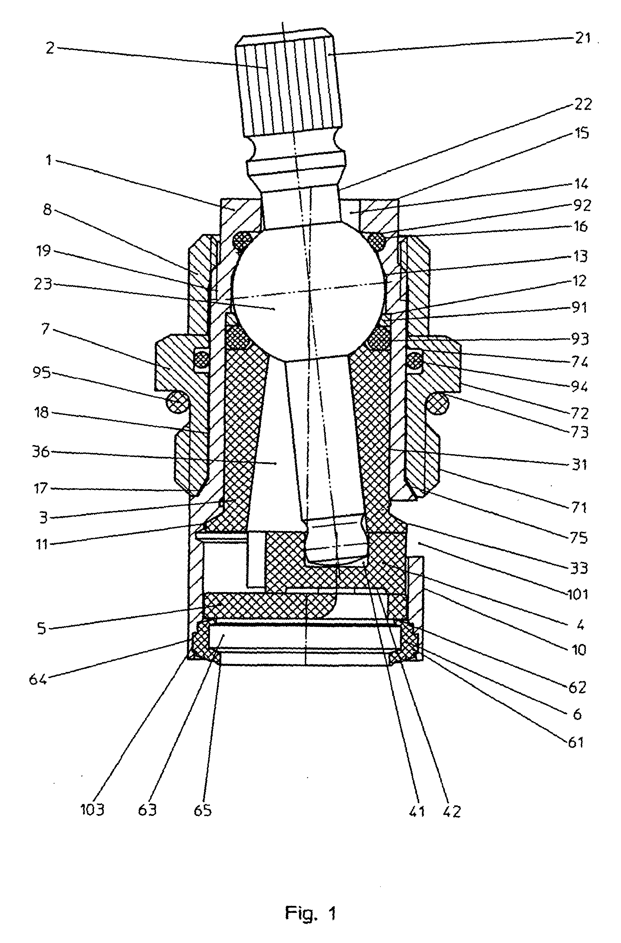

- Figur 1: die Darstellung eines Ventiloberteils im Axialschnitt;

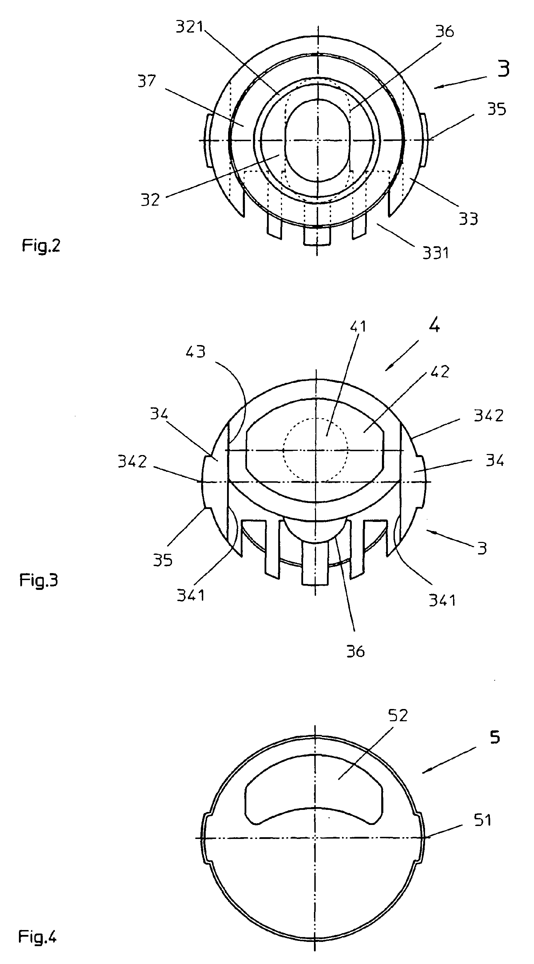

- Figur 2: die Darstellung der Scheibenführung des Ventiloberteils in der Draufsicht;
- Figur 3: die Darstellung der Scheibenführung des Ventiloberteils mit eingesetzter Steuerscheibe in der Untersicht und
- Figur 4: die Darstellung der Einlassscheibe des Ventiloberteils in der Draufsicht.

Das als Ausführungsbeispiel gewählte Ventiloberteil weist ein Kopfstück 1 auf, das von einer in ihm radial geführten Spindel 2 mittig durchsetzt ist. Die Spindel 2 ist über eine drehfeste Scheibenführung 3 geführt und mit einer Steuerscheibe 4 formschlüssig verbunden, welche wiederum in der Scheibenführung 3 geführt ist. Die Steuerscheibe 4 steht mit einer Einlassscheibe 5 in Berührung, die in dem Kopfstück 1 gehalten ist und auf ihrer der Steuerscheibe 4 abgewandten Seite mit einer Dichtung 6 in Berührung steht. Um das Kopfstück 1 ist mittig eine Überwurfhülse 7 angeordnet, die auf ihrer der Dichtung 6 abgewandten Seite mit einer Kontermutter 8 fixiert ist.

Das Kopfstück 1 besteht aus einem symmetrischen Hohlkörper, dessen beide Stirnflächen offen sind. Auf der der - nicht dargestellten - Armatur zugewandten Seite weist das Kopfstück 1 einen hülsenartigen Teil 10 auf. An dem freien Ende des hülsenartigen Teils 10 weist das Kopfstück 1 einen zentralen Zulauf auf. In dem hülsenartigen Teil 10 ist ein Durchtrittsfenster 101 vorgesehen. In Abwandlung des Ausführungsbeispiel können auch mehrere Durchtrittsfenster 101 vorgesehen sein, die dann von Längsstegen begrenzt sind. Innen ist in dem hülsenartigen Teil 10 eine Nut 103 eingebracht.

Auf der der Armatur abgewandten Seite ist im Anschluss an das Fenster 101 der Innendurchmesser des Kopfstücks 1 abgesetzt und mit geringerem Durchmesser fortgeführt. Der hierdurch gebildete Absatz ist als Fase 11 ausgeführt. Dem Verlauf des Kopfstücks weiter folgend ist im letzten Drittel ein Absatz 12 vorgesehen, an den sich eine zunehmende Durchmesserverjüngung in Form eines Kugelabschnitts 13 anschließt. Der Kugelabschnitt 13 läuft auf seiner der Armatur zugewandten Seite senkrecht aus; auf seiner der Armatur abgewandten Seite mündet der Kugelabschnitt 13 in eine Bohrung 14. Die Bohrung 14 befindet sich in einem Kopfstückoberteil 15, welches das Kopfstück 1 begrenzt. Auf der der Armatur zugewandten Seite des Kopfstückoberteils 15 ist eine Ringnut 16 eingebracht, die der Aufnahme eines O-Rings 92 dient. Außen ist der Durchmesser des Kopfstücks 1 im Anschluss an das Fenster 101 zum Innendurchmesser über eine Fase 17 verjüngt ausgeführt. An die Fase 17 schließt sich ein Zylinder 18 an, an dessen dem der Armatur abgewandten Ende ein Außengewinde 19 angeordnet ist.

Die Spindel 2 ist im Wesentlichen massiv ausgeführt. Sie ist an ihrer der Armatur abgewandten Stirnseite außen als Außenvielkant 21 ausgeführt, der zur Aufnahme eines - nicht dargestellten - Dreh- und Schwenkgriffs dient. Anschließend ist außen an der Spindel 2 eine Zylinderfläche 22 vorgesehen, mit der die Spindel 2 die Bohrung 14 durchsetzt und hierdurch einen Anschlag erfährt. An die Zylinderfläche 22 schließt sich ein kugelförmiger Abschnitt 23 an, an den sich eine weitere Zylinderfläche 24 anschließt. Das Spindelende ist kugelförmig ausgebildet. Der kugelförmige Abschnitt 23 korrespondiert mit dem Kugelabschnitt 13 des Kopfstücks 1.

Die Scheibenführung 3 besteht aus einem zylindrischen Grundkörper 31, der an seiner der Armatur zugewandten Seite einen Führungsteller 33 aufweist. Der Führungsteller 33 ist mit Fließkerben 331 versehen, die in Richtung des Durchtrittsfensters 101 des Kopfstücks 1 verlaufen. Parallel zu den Fließkerben 331 sind zwei Führungsstege 34 angeordnet, deren Innenflächen 341 plan ausgeführt sind und deren Außenkonturen 342 einem Kreisausschnitt entsprechen, dessen Durchmesser gleich dem des Führungstellers 33 ist. Die Führungsstege 34 sind an ihrer Außenseite mit zwei Führungsnasen 35 versehen, die in - nicht dargestellte - Führungsnuten auf der Innenseite des hülsenartigen Teils 10 des Kopfstücks 1 eingreifen, welche von der Nut 103 bis zur Fase 11 verlaufen. Durch das Eingreifen der Führungsnasen 35 in die Führungsnuten des Kopfstücks ist eine Verdrehsicherung der Scheibenführung 3 im Kopfstück 1 geschaffen.

In den zylindrischen Grundkörper 31 ist entlang seiner Rotationsachse eine Spindelführung 36 eingebracht, die in Form eines Langlochs ausgeführt ist, dessen Längsachse parallel zu den Führungsstegen 34 verläuft. Die Länge des Langlochs nimmt entlang der Rotationsachse des zylindrischen Grundkörpers in Richtung des Führungstellers 33 zu; die Spindelführung 36 ist folglich im Wesentlichen kegelförmig ausgebildet. An ihrem dem Führungsteller 33 abgewandten Ende ist die Spindelführung 36 mit einer Kugelaufnahme 32 versehen. Die Kugelaufnahme 32 ist als Senkbohrung ausgeführt, deren Durchmesser größer als die Länge des Langloches auf der der Armatur abgewandten Seite ist. Der Rand der Senkbohrung ist in Form einer angehäuften Fase 321 auf dem zylindrischen Grundkörper 31 ausgebildet, deren Außendurchmesser gegenüber dem Außendurchmesser des zylindrischen Grundkörpers 31 reduziert ist. Die dadurch ausgebildete ringförmige Fläche 37 zwischen der Fase 321 der Kugelaufnahme 32 und der Außenkante des zylindrischen Grundkörpers 31 dient zur Aufnahme eines O-Rings 93, der den kugelförmigen Abschnitt 23 der Spindel 2, welcher in der Kugelaufnahme 32 aufliegt, gegenüber der Scheibenführung 3 sowie dem Kopfstück 1 abdichtet. Der O-Ring 93 ist durch die Scheibe 91 gehalten.

Auf dem Führungsteller 33 der Scheibenführung 3 ist zwischen den Führungsstegen 34 die Steuerscheibe 4 angeordnet. Diese weist eine im Wesentlichen elliptische Außenkontur auf, die an ihren Längsenden orthogonal zur Längsmittelachse gekürzt ist, wodurch zwei zueinander parallele Seitenflächen 43 hervorgerufen sind. Der Abstand der Seitenflächen 43 zueinander entspricht der lichten Weite der Führungsstege 34 der Scheibenführung 3. In die Steuerscheibe 4 ist mittig eine Sacklochbohrung 41 eingebracht, deren Durchmesser etwas größer ist, als der Durchmesser des kugelförmigen Endstücks der Spindel 2. In montiertem Zustand greift das Endstück in die Sacklochbohrung 41 ein. Auf der der Sacklochbohrung 41 gegenüberliegenden Seite der Steuerscheibe 4 ist eine Vertiefung 42 eingebracht, die eine der Außenkontur der Steuerscheibe 4 vergleichbare Form aufweist.

Die Einlassscheibe 5 weist auf ihrem Umfang zwei sich diametral gegenüberliegende Führungsnasen 51 auf. Die Führungsnasen 51 fassen in - nicht dargestellte - Führungsnuten des hülsenförmigen Teils 10 des Kopfstücks 1. Die Einlassscheibe 5 ist damit drehfest in dem Kopfstück 1 angeordnet. In der Scheibe 5 ist eine Durchtrittsöffnung 52 eingebracht, die eine angenähert sichelförmige Kontur aufweist und deren Spiegelsymmetrieachse auf der Orthogonalen zur Verbindungsachse der Führungsnasen 51 liegt. Der Außendurchmesser der Einlassscheibe 5 entspricht dem Außendurchmesser des Führungstellers 33 der Scheibenführung 3. Wird die Spindel 2 innerhalb der Spindelführung 36 geschwenkt, so wird die Steuerscheibe 4 radial auf der Einlassscheibe 5 bewegt, wodurch die Durchtrittsöffnung 52 der Einlassscheibe 5 freigegeben bzw. verschlossen wird.

Der Dichtring 6 ist nach Art einer Lippendichtung ausgebildet. Er besteht im Wesentlichen aus einem Mittelstück 61, an dem auf seiner der Einlassscheibe 5 zugewandten Stirnseite eine Lippe 62 angeformt ist. Die Lippe 62 hat im Querschnitt eine im Wesentlichen trapezförmige Ausbildung. Sie ist unter einem Winkel zur Horizontalen angeordnet. Mit der der Spindel 2 zugewandten Seite der Lippe 62 liegt der Dichtring 6 an der Einlassscheibe 5 dichtend an. Im Anschluss an die Lippe 62 ist zwischen dieser und dem Mittelstück 61 eine Ausnehmung 63 ausgebildet. Das Mittelstück 61 ist außen mit einem Bund 64 versehen, der in die Nut 103 des hülsenartigen Teils 10 des Kopfstücks 1 greift. Innen ist an dem Mittelstück 61 eine Wulst 65 ausgebildet, die mit ihrer der Spindel 2 abgewandten Seite in montiertem Zustand der Armatur plan auf dem Ventilsitz der Armatur aufliegt.

Die Überwurfhülse 7 weist ein Gewindestück 71 auf, an das sich ein Außensechskant 72 anschließt. Zwischen Gewindestück 71 und Außensechskant 72 ist eine Dichtungsnut 73 zur Aufnahme eines O-Rings 95 vorgesehen. Der O-Ring 95 dichtet das Ventiloberteil, welches mit Hilfe der Überwurfhülse 7 mit der Armatur verschraubt ist, gegen diese ab. Der Innendurchmesser der Überwurfhülse 7 entspricht dem Außendurchmesser des Zylinders 18. Innen ist im Bereich des Außensechskants 72 eine Dichtungsnut 74 zur Aufnahme eines O-Rings 94 eingebracht, der die Überwurfhülse 7 gegenüber dem Kopfstück 1 abdichtet. An ihrem der Armatur zugewandten Ende ist die Überwurfhülse innen mit einer Fase 75 versehen, die in montiertem Zustand des Ventiloberteils mit der Fase 17 des Kopfstücks 1 korrespondiert. Auf Grund der stufenlosen Korrespondenz des Kopfstücks 1 mit der Überwurfhülse 7 ist das Ventiloberteil in jeder beliebigen Position zum Bediener ausrichtbar. Erst nach der Ausrichtung erfolgt die Fixierung des Oberteils mittels der Kontermutter 8.

## Patentansprüche

1. Ventiloberteil mit einem Kopfstück (1), in dem eine Spindel (2) angeordnet ist, die auf einer Scheibenführung (3) aufliegt und formschlüssig mit einer in der Scheibenführung (3) geführten Steuerscheibe (4) im Eingriff steht, die mit einer drehfesten Einlassscheibe (5) in Berührung steht, die mindestens eine Durchtrittsöffnung (52) aufweist, wobei die Spindel (2) einen kugelförmigen Abschnitt (23) aufweist, wobei die Spindel (2) im mittleren Abschnitt (23) und an ihrem dem Zulauf zugewandten Ende kugelförmig ausgeführt ist, sodass die Spindel (2) im Kopfstück (1) und in der Steuerscheibe (4) drehbar gelagert ist, **dadurch gekennzeichnet, dass** das Kopfstück (1) an seinem dem Zulauf abgewandten Ende verjüngt ausgeführt ist und auf dem verjüngt ausgeführten Abschnitt des Kopfstücks (1) eine Überwurfhülse (7) mit einem Gewindestück (71) aufgeschoben ist, an das sich ein Außensechskant (72) anschließt.

2. Ventiloberteil nach Anspruch 1, **dadurch gekennzeichnet, dass** das Kopfstück (1) einen zentralen Zulauf aufweist.

3. Ventiloberteil nach Anspruch 1 oder 2, **dadurch gekennzeichnet, dass** die Spindel (2) über eine drehfeste Scheibenführung (3) axial geführt ist.

4. Ventiloberteil nach einem der Ansprüche 1 bis 3, **dadurch gekennzeichnet, dass** das Kopfstück (1) mindestens ein seitliches Durchtrittsfenster (101) aufweist, in das die Scheibenführung (3) mündet.

5. Ventiloberteil nach Anspruch 4, **dadurch gekennzeichnet, dass** die Scheibenführung (3) Fließkerben (331) aufweist, die in Richtung des Durchtrittsfensters (101) verlaufen.

6. Ventiloberteil nach einem der Ansprüche 1 bis 5, **dadurch gekennzeichnet, dass** die Steuerscheibe (4) eine im Wesentlichen elliptische Außenkontur aufweist.

7. Ventiloberteil nach einem der Ansprüche 1 bis 6, **dadurch gekennzeichnet, dass** die Steuerscheibe (4) in der Scheibenführung (3) zwischen Führungsstegen (34) axial verschiebbar angeordnet ist.

8. Ventiloberteil nach einem der Ansprüche 1 bis 7, **dadurch gekennzeichnet, dass** in die Scheibenführung (3) eine Spindelführung (36) eingebracht ist, die in der Form eines Langlochs ausgeführt ist.

9. Ventiloberteil nach Anspruch 8, **dadurch gekennzeichnet, dass** die Spindelführung (36) im Wesentlichen kegelförmig ausgebildet ist.

10. Ventiloberteil nach Anspruch 9, **dadurch gekennzeichnet, dass** im Bereich des Außensechskants (72) innen eine Dichtungsnut (74) zur Aufnahme eines Dichtungsrings (94) eingebracht ist.

11. Ventiloberteil nach Anspruch 9 oder 10, **dadurch gekennzeichnet, dass** zwischen dem Gewindestück (71) und dem Außensechskant (72) eine Dichtungsnut (73) zur Aufnahme eines Dichtungsrings (95) vorgesehen ist.

## Claims

1. Valve head with a top part (1) in which a spindle (2) is located which rests on a disk guide (3) and fits positively into a control disk (4) which is guided in the disk guide (3) and which contacts a non-turning entry disk (5) which has at least one inlet opening (5), where the spindle (2) has a spherical section (23), where the spindle (2) is spherical in shape in its middle section (23) and at the end facing towards the input flow, in such a way that the spindle (2) can turn in the top part (1) and the control disk (4), **characterised in that** the top part (1) is tapered at the end facing towards the input flow, and a coupling sleeve (7) with a threaded part (71) which connects with a hexagon insert bit (72), is pushed onto the tapered section of the top part (1).

2. Valve head according to claim 1, **characterised in that** the top part (1) has a central input flow.

3. Valve head according to claim 1 or 2, **characterised in that** the spindle (2) is guided axially by means of a non-turning disk guide (3).

4. Valve head according to one of the claims 1 to 3, **characterised in that** the top part (1) has at least one lateral through window (101) into which the disk guide (3) runs.

5. Valve head according to claim 4, **characterised in that** the disk guide (3) has flow grooves (331) running in the direction of the through window (101).

6. Valve head according to one of the claims 1 to 5, **characterised in that** the control disk (4) has an outer contour which is substantially elliptical.

7. Valve head according to one of the claims 1 to 6, **characterised in that** the control disk (4) is located for axial movement between guide ridges (34) in the disk guide (3).

8. Valve head according to one of the claims 1 to 7, **characterised in that** a spindle guide (36) in the form of a slot is included in the disk guide (3).

9. Valve head according to claim 8, **characterised in that** the spindle guide (36) is substantially conical in shape.

10. Valve head according to claim 9, **characterised in that** a sealing groove (74) for a sealing ring (94) is included in the inside of the area of the hexagon insert bit (72).

11. Valve head according to claim 9 or 10, **characterised in that** a sealing groove (73) for a sealing ring (95) is provided between the threaded part (71) and the hexagon insert bit (72).

## Revendications

1. Tête de robinet comportant une pièce de tête (1) dans laquelle est agencée une broche (2) reposant sur un guidage de rondelle (3) et qui est engagée par adhérence de forme avec une rondelle de commande (4) guidée dans le guidage de rondelle (3), ladite rondelle de commande étant au contact d'une rondelle d'admission (5) résistante à la torsion, qui présente au moins un orifice de passage (52), la broche (2) ayant une section sphérique (23) et la broche (2) étant réalisée sous forme sphérique dans la section médiane (23) et à son extrémité orientée vers l'alimentation, de sorte que la broche (2) est logée dans la pièce de tête (1) et dans la rondelle de commande (4) de manière pivotante, la pièce de tête (1) se rétrécissant à son extrémité éloignée de l'alimentation, et une douille d'accouplement (7) étant passée sur la section rétrécie de la pièce de tête (1) avec une pièce filetée (71) à laquelle est raccordée un hexagone mâle (72).

2. Tête de robinet selon la revendication 1, **caractérisée en ce que** la pièce de tête (1) présente une alimentation centrale.

3. Tête de robinet selon quelqu'une des revendications 1 ou 2, **caractérisée en ce que** la broche (2) est guidée axialement par un guidage de rondelle (3) résistant à la torsion.

4. Tête de robinet selon quelqu'une des revendications 1 à 3, **caractérisée en ce que** la pièce de tête (1) présente au moins une fenêtre de passage latérale (101), dans laquelle débouche le guidage de rondelle (3).

5. Tête de robinet selon la revendication 4 **caractérisée en ce que** le guidage de rondelle (3) présente des entailles d'écoulement (331) qui sont orientées vers la fenêtre de passage (101).

6. Tête de robinet selon quelqu'une des revendications 1 à 5, **caractérisée en ce que** la rondelle de commande (4) présente un contour extérieur essentiellement elliptique.

7. Tête de robinet selon quelqu'une des revendications 1 à 6, **caractérisée en ce que** la rondelle de commande (4) est agencée entre les talons de guidage dans le guidage (34) de rondelle (3) de manière à se déplacer axialement.

8. Tête de robinet selon quelqu'une des revendications 1 à 7, **caractérisée en ce que** dans le guidage de rondelle (3) se trouve un guidage de broche (36) réalisé sous forme de trou oblong.

9. Tête de robinet selon la revendication 8, **caractérisée en ce que** le guidage de broche (36) est essentiellement de forme conique.

10. Tête de robinet selon la revendication 9, **caractérisée en ce qu'**il se trouve dans la zone de l'hexagone mâle (72) à l'intérieur une rainure d'étanchéité (74) destinée à accueillir une bague d'étanchéité (94).

11. Tête de robinet selon quelqu'une des revendications 9 ou 10, **caractérisée en ce qu'**est prévue entre la pièce filetée (71) et l'hexagone mâle (72) une rainure d'étanchéité (73) destinée à accueillir une bague d'étanchéité (95).
